# EUROPÄISCHE PATENTSCHRIFT

(11) **EP 1 618 968 B1**
(45) Veröffentlichungstag und Bekanntmachung des Hinweises auf die Patenterteilung: **16.01.2008**
(21) Anmeldenummer: 04016865.0
(22) Anmeldetag: 16.07.2004
(51) Int. Cl.: B07B 1/16, B65D 25/02, B65G 25/02

(54) **Förder- und Sortiervorrichtung**
Conveying and sorting device
Appareil de convoyage et de triage

(43) Veröffentlichungstag der Anmeldung: 25.01.2006
(73) Patentinhaber: Anlagenbau Umwelt + Technik Chemnitz GmbH, 09116 Chemnitz (DE)
(72) Erfinder: Winter Mirko, 09116 Chemnitz (DE); Veit, Elke, 09405 Zschopau (DE); Schreiber, Wolfgang, 09557 Flöha (DE)
(74) Vertreter: Grünecker, Kinkeldey, Stockmair & Schwanhäusser Anwaltssozietät

(56) Entgegenhaltungen:
- EP-A- 0 882 519
- CA-A- 2 253 001
- DE-U- 29 904 262
- FR-A- 756 583
- US-A- 4 653 344
- PATENT ABSTRACTS OF JAPAN Bd. 2003, Nr. 04, 2. April 2003 (2003-04-02) & JP 2002 372031 A (HIWAKI SHIYUUZO), 26. Dezember 2002 (2002-12-26)

## Beschreibung

Die vorliegende Erfindung betrifft eine Vorrichtung zum Befördern und Sortieren einer Fraktion, insbesondere von Papier oder Pappe, wobei die Vorrichtung aufweist: mehrere, parallel nebeneinander angeordnete Förderelemente; wenigstens eine treibende und eine getriebene Kurbelwelle zum Bewegen der Förderelemente; und zwischen den Kurbelwellen und den Förderelementen vorgesehene Verbindungselemente mit wenigstens einem Lager zur Verbindung mit der Kurbelwelle.

Eine Vorrichtung dieser Gattung ist aus der DE 299 04 262 U1 bekannt. Diese Vorrichtung weist zwischen Förderleisten der Förderelemente über den beiden Kurbelwellen jeweils einen Verbindungsbügel auf, an dem ein Lager zur Verbindung mit der jeweiligen Kurbelwelle vorgesehen ist. Die Kurbelwelle ist dabei durch eine Öffnung bzw. ein Loch in einem Lagerbock des Lagers hindurchgeführt. Um diese Durchführung gewährleisten zu können, muss in der Öffnung ausreichend Spiel vorhanden sein. Dieses Spiel führt jedoch zwangsläufig im Betrieb der Vorrichtung zu ruckartigen Bewegungen und hat zudem den Nachteil, dass sich solche Zwischenräume in dem Lager verstärkt mit Schmutz und dergleichen zusetzen können.

Die Druckschrift US 4,653,344 beschreibt ein Lagersystem, das an langen rotierenden Wellen mit einer Vielzahl von Stützpunkten und zu stützenden Objekten eingesetzt werden soll. In einer Ausführungsform des in der Druckschrift beschriebenen Lagersystems ist eine Welle gezeigt, an welcher drei Lager montiert sind. Die Lager weisen radial teilbare Lagerinnenteile als auch teilbare Lagergehäuse auf.

Die Druckschrift EP 0 882 519 A2 beinhaltet eine Schüttlervorrichtung, mit welcher Holzschnitzel hinsichtlich ihrer Größe sortiert werden sollen. Hierfür werden sich abwechselnd nach oben und unten bewegende Balken verwendet, die rotierbar an Wellen montiert sind, welche exzentrisch durch Exzenterwellen angetrieben werden. Es ist erwähnt, dass beispielsweise Gummi als Dämpfungsmaterial an Innenseiten von Befestigungsbohrungen zur Montage von Beinen der oszillierenden Balken verwendet werden kann.

Es ist die Aufgabe der vorliegenden Erfindung, eine Vorrichtung der oben genannten Gattung zur Verfügung zu stellen, die robust, standfest und einfach zu warten ist.

Die Aufgabe wird dadurch gelöst, dass das Lager zur Verbindung mit der Kurbelwelle ein radial geteiltes Lager ist, das auf der Kurbelwelle zusammensetzbar ist, wobei an den Verbindungselementen, die die angetriebene Kurbelwelle mit den Förderelementen verbinden, eine elastische Lagerung vorgesehen ist, und wobei die Verbindungselemente, die die treibende Kurbelwele mit den Förderelementen verbinden, eine starre Lagerung aufweisen.

Das geteilte Lager ist einfach an der Kurbelwelle demontierbar, so dass sowohl das Innere des Lagers als auch die Verbindungsstelle zur Kurbelwelle problemlos zugänglich ist. Somit kann das Lager einfach gewartet werden und eventuell defekte oder beschädigte Teile ausgetauscht werden, wobei die übrige Vorrichtung unbeeinflusst von der Wartung des einzelnen Lagers bleibt. Bei der erfindungsgemäßen Vorrichtung kann somit vermieden werden, die gesamte Kurbelwelle ausbauen zu müssen, um beispielsweise ein Lager auszutauschen.

Zudem kann das geteilte Lager sehr einfach um die Kurbelwelle montiert werden, so dass ein Spiel zwischen dem geteilten Lager und der Kurbelwelle gering sein kann, was die Standfestigkeit der Vorrichtung bedeutend heraufsetzt. Somit können Schläge des Lagers an der Kurbelwelle und die Gefahr eines Zusetzens des Lagerinnenraums mit Schmutz weitgehend vermieden werden.

Gemäß einer vorteilhaften Ausführungsform der vorliegenden Erfindung ist das Lager um einen Hubzapfen der Kurbelwelle umgreifend montiert. Hiermit kann der Hub der Kurbelwelle zuverlässig auf das Förderelement übertragen werden, wobei ein passgenauer Kontakt zwischen dem Lager und der Kurbelwelle gewährleistet ist.

Entsprechend einer vorteilhaften Variante der Erfindung ist das Lager in einem teilbaren Lagergehäuse vorgesehen. Das Lagergehäuse ermöglicht einen Schutz des Lagers und ist ebenso einfach wie das geteilte Lager selbst montier- und demontierbar, was eine schnelle Montage des Lagers mit dem Lagergehäuse an der Kurbelwelle ermöglicht und die Wartung der Vorrichtung vereinfacht.

Gemäß einer bevorzugten Ausführungsform der vorliegenden Erfindung ist die Kurbelwelle aus mehreren Drehteilen zusammengeschweißt. Die erfindungsgemäße Vorrichtung ist mit der zusammengeschweißten Kurbelwelle preiswerter herstellbar als andere Vorrichtungen, die geschmiedete bzw. aus einem Stück gefertigte Kurbelwellen aufweisen.

Entsprechend der Erfindung weist wenigstens eines der Verbindungselemente eine elastische Lagerung für eines der Förderelemente auf. Mit der elastischen Lagerung können eventuelle Unregelmäßigkeiten bei der Fertigung der Vorrichtung, insbesondere bei der Größe der Förderelemente oder dem Hub der Kurbelwelle, ausgeglichen werden. Zusätzlich bildet die elastische Lagerung eine Stoßdämpfung für die Vorrichtung.

Gemäß einem besonders günstigen Beispiel der Erfindung weist die elastische Lagerung wenigstens eine Gummibuchse auf. Solche Gummibuchsen lassen sich einfach in dem Verbindungselement platzieren und weisen eine hohe Elastizität auf, so dass mit dem Verbindungselement eventuelle Herstellungstoleranzen an der Vorrichtung besonders gut ausgeglichen werden können.

Es ist weiterhin von Vorteil, dass gemäß der Erfindung die elastische Lagerung an den Verbindungselementen vorgesehen ist, die die angetriebene Kurbelwelle mit den Förderelementen verbinden, und dass die Verbindungselemente, die die treibende Kurbelwelle mit den Förderelementen verbinden, eine starre Lagerung aufweisen. Durch die nur einseitige elastische Lagerung der Förderelemente kann ein Aufschwingen der Vorrichtung vermieden werden.

Gemäß einer besonders günstigen Variante der Erfindung ist an wenigstens einer der Kurbelwellen eine Mittenlagerung um den mittelsten Wellenzapfen vorgesehen, die ein geteiltes Lager aufweist. Durch die Mittenlagerung wird die Lage der Kurbelwelle unterstützt, wobei die Mittenlagerung außerdem gut montier- und demontierbar ist. Dies gewährleistet eine leichte Wartung der Mittenlagerung der Kurbelwelle.

In einer vorteilhaften Ausführungsform der Erfindung weisen wenigstens zwei der Förderelemente unterschiedliche Breiten auf. Durch die verschiedenen Breiten der Förderelemente kann die Breite der Vorrichtung variabel gestaltet werden.

Ausführungsformen der Erfindung sind in den Figuren der Zeichnungen dargestellt und werden nachstehend erläutert.

Es zeigen:
- Figur 1: eine schematische Seitenansicht einer ersten Ausführungsform der Förder- und Sortiervorrichtung der vorliegenden Erfindung;
- Figur 2: eine schematische Seitenansicht einer zweiten Ausführungsform der Förder- und Sortiervorrichtung der vorliegenden Erfindung;
- Figur 3: eine schematische Draufsicht auf eine Förder- und Sortiervorrichtung der vorliegenden Erfindung;
- Figur 4: eine schematische Vorderansicht auf eine Förder- und Sortiervorrichtung der vorliegenden Erfindung,
- Figur 5: eine schematische Seitenansicht eines Ausschnittes der Förder- und Sortiervorrichtung der vorliegenden Erfindung;
- Figur 6: eine schematische Seitenansicht eines geteilten Lagers der vorliegenden Erfindung; und
- Figur 7: eine schematische Vorderansicht des geteilten Lagers aus Figur 6 entlang der Schnittlinie A - A.

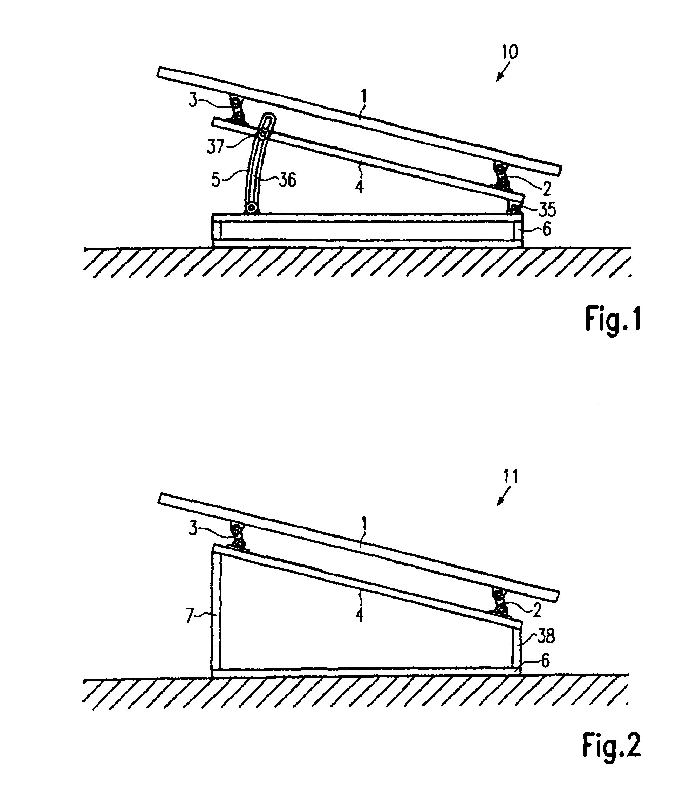

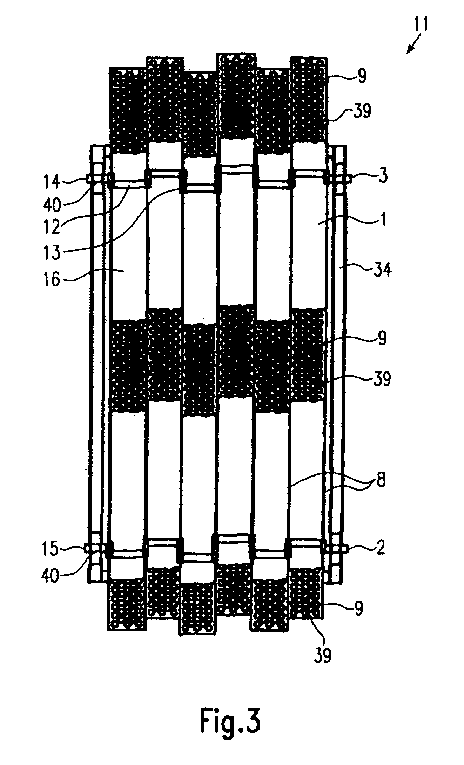

Figur 1 zeigt eine schematische Seitenansicht einer ersten Ausführungsform einer Förder- und Sortiervorrichtung 10 gemäß der vorliegenden Erfindung. Die Förder- und Sortiervorrichtung 10 weist mehrere, nebeneinander angeordnete, schräg angestellte Förderelemente oder Paddel 1 auf, von welchen in der gezeigten Prinzipdarstellung in der Seitenansicht nur eines sichtbar ist. Bei einer bevorzugten Ausführungsform der Erfindung sind sechs Förderelemente 1 nebeneinander angeordnet, wie es beispielsweise in Figur 3 zu sehen ist.

Die Förderelemente 1 sind jeweils über unten bzw. oben an der Vorrichtung 10, unterhalb der Förderelemente 1 angeordnete Kurbelwellen 2, 3 gelagert. Die Kurbelwellen 2, 3 sind an einer schrägen Auflage 4 eines Trägergestells 6 gelagert.

Die Winkelanstellung der schrägen Auflage 4 ist in der Förder- und Sortiervorrichtung 10 über eine Winkeleinstellungsvorrichtung 5 variabel einstellbar. Dabei ist ein unteres Ende der schrägen Auflage 4 mittels eines Gelenkes 35 mit dem Trägergestell 6 verbunden. Die Winkeleinstellungsvorrichtung 5 weist in dem gezeigten Beispiel eine Klemmvorrichtung mit einer Nut 36 auf, durch welche eine Schraube 37 oder ein ähnliches Festhalteelement geführt ist und wobei die Schraube 37 mit der schrägen Auflage 4 verbunden ist.

Durch Lockern der Schraube 37 kann die schräge Auflage 4 entlang der Nut 36 der Winkeleinstellungsvorrichtung 5 auf- oder abbewegt werden. Durch Festziehen der Schraube 37 kann die schräge Auflage 4 in einer eingestellten Winkelstellung gehalten werden.

In einer anderen, nicht gezeigten Ausführungsform der Erfindung kann anstelle der schrägen Auflage 4 auch eine ebene, nicht geneigte Auflage verwendet werden.

Figur 2 zeigt eine schematische Seitenansicht einer zweiten Ausführungsform einer Förder- und Sortiervorrichtung 11 der vorliegenden Erfindung. Die Förder- und Sortiervorrichtung 11 besitzt, ebenso wie die Förder- und Sortiervorrichtung 10, mehrere Förderelemente 1, die an Kurbelwellen 2, 3 auf einer schrägen Auflage 4 gelagert sind. Die Neigung der schrägen Auflage 4 bzw. der Förderelemente 1 ist in der Förder- und Sortiervorrichtung 11 durch die Höhe von starren Trägerstützen 7, 38 des Trägergestells 6 festgelegt, die sich jeweils etwa am unteren und oberen Ende der schrägen Auflage 4 befinden und diese stützen.

Figur 3 zeigt schematisch eine Draufsicht auf die Förder- und Sortiervorrichtung 11. In dem gezeigten Beispiel liegen sechs Förderelemente oder Paddel 1 parallel nebeneinander. Die Förderelemente 1 sind etwa gleich ausgebildet und haben die Form langgestreckter Rechtecke.

In einer anderen, nicht gezeigten Ausführungsvariante der Erfindung können auch unterschiedlich breite Förderelemente oder Paddel 1 verwendet werden. Es ist auch möglich, in anderen Ausführungsformen der Erfindung weniger oder mehr als sechs Förderelemente oder Paddel 1 einzusetzen. Beispielsweise kommen auch Förder- und Sortiervorrichtungen mit vier oder auch zwei Förderelementen 1 in Betracht.

Die Förderelemente 1 weisen seitlich angeordnete Förderleisten oder Schienen 8 auf. In der Förder- und Sortiervorrichtung 11 sind die Förderleisten 8 etwa C-förmig ausgebildet, können aber auch in anderen Ausführungsformen der vorliegenden Erfindung beispielsweise L- oder U-förmig ausgebildet sein.

Auf jeweils zwei Förderleisten 8 liegen Mitnehmer 16 in Form von flächig ausgebildeten Platten auf. Auf den Oberflächen der Mitnehmer 16 werden im Betrieb der Förder- und Sortiervorrichtung 11 beispielsweise später die flächigen Anteile der Fraktion ausgehend von dem in den Figuren 1 oder 2 dargestellten unteren Bereich der Vorrichtung 11 nach oben transportiert.

Die Mitnehmer 16 können in Teilbereichen oder entlang ihrer gesamten Fläche Bereiche mit Durchlassöffnungen 9 aufweisen. Durch die Durchlassöffnungen 9 kann im Betrieb der Vorrichtung Material oder Fraktion geringer Größe hindurchfallen, welches unterhalb der Förder- und Sortiervorrichtung 11 aufgefangen werden kann. Die Durchlassöffnungen 9 sind in Figur 3 in Form von über die Länge eines Förderelementes 1 verteilten Lochblechen 39 angeordnet.

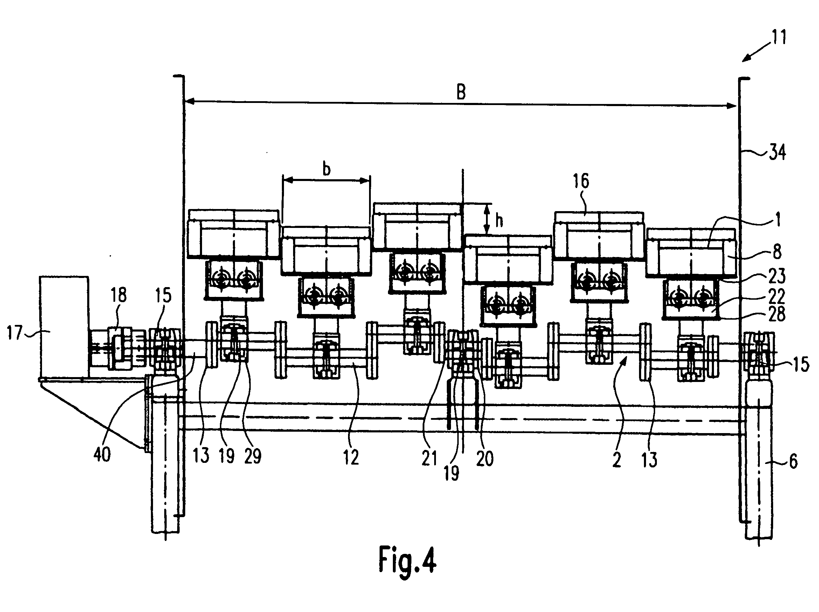

Die Förderelemente oder Paddel 1 liegen nahe ihrem unteren Ende bzw. nahe ihrem oberen Ende über in Figur 3 nicht gezeigte Verbindungselemente 22 auf Kurbelwellen 2, 3 auf. Die Kurbelwellen 2, 3 sind mittels Lagern 14, 15 an dem Trägergestell 6 montiert. Die Kurbelwellen 2, 3 sind im Wesentlichen identisch ausgebildet. Die unten angeordnete Kurbelwelle 2 besitzt zusätzlich zu der oben angeordneten Kurbelwelle 3 einen seitlich angeordneten Antriebszapfen, der in Figur 4 dargestellt ist.

Die Kurbelwellen 2, 3 weisen wie herkömmliche Kurbelwellen Wellenzapfen 40 auf, die in den Grundlagem laufen und sich nur um die Drehachse der Kurbelwelle 2, 3 drehen. Zudem besitzen die Kurbelwellen 2, 3 Hubzapfen 12, die einen Hub h über die Verbindungselemente 22 auf die Förderelemente oder Paddel 1 im Betrieb der Förder- und Sortiervorrichtung 11 übertragen. Zwischen den Zapfen sind Wangen 13 angeordnet, die die Hubzapfen 12 mit den Wellenzapfen 40 verbinden.

Figur 4 zeigt eine schematische Vorderansicht auf die untere Kurbelwelle 2 der Förder- und Sortiervorrichtung 11. Die untere Kurbelwelle 2 ist in der Förder- und Sortiervorrichtung 11 die treibende Kurbelwelle, die über einen Motor 17 mittels einer Kupplung 18 angetrieben wird.

Die Kurbelwelle 2 ist beidseitig an dem Trägergestell 6 mittels Lagern 15 montiert. Die Lager 15 sind in der gezeigten Ausführungsform außen und mittig an dem Trägergestell 6 vorgesehen. Innerhalb der Seitenwände 34 schließt sich an die jeweiligen Lager 15 ein Wellenzapfen 40 an, der sich um die Drehachse der Kurbelwelle 2 dreht. An den Wellenzapfen 40 grenzt jeweils eine Wange 13, die den Wellenzapfen 40 mit einem gegenüber befindlichen Hubzapfen 12 verbindet. Zwischen den Hubzapfen 12 besteht ein Winkel von 120°, 180° oder einem anderen Winkel, welcher in Abhängigkeit von der Anzahl der Förderelemente bzw. Paddel 1 bestimmbar ist.

Der Hubzapfen 12 beschreibt im Betrieb der Kurbelwelle 2 ein Kreisbahn um die Drehachse der Kurbelwelle 2. Der Durchmesser dieser Kreisbahn entspricht dem Hub h der Kurbelwelle 2, der über die Verbindungselemente 22, die über der Kurbelwelle 2 angeordnet sind, auf die Trägerelemente oder Paddel 1 übertragen wird. Die Trägerelemente oder Paddel 1 vollführen im Betrieb der Förder- und Sortiervorrichtung 11 zwischen ihrer obersten und ihrer untersten Position eine Rotationsbewegung um den Hub h.

Bei der gezeigten Kurbelwelle 2 schließt jeweils an den Hubzapfen 12 in Richtung der Mitte der Kurbelwelle 2 wieder eine Wange 13 an, die den Hubzapfen 12 direkt mit einem weiteren Hubzapfen 12 koppelt, an welchen über eine weitere Wange 13 wiederum eine Hubzapfen 12 gekoppelt ist. Anstelle dieser direkten Verbindung von Hubzapfen 12 über die Wangen 13 können auch zwischen den einzelnen Hubzapfen 12 Wellenzapfen 40 vorgesehen sein, deren Achse mit der Drehachse der Kurbelwelle 2 übereinstimmt.

Die in Figur 4 dargestellte Kurbelwelle 2 weist etwa in der Mitte der Förder- und Sortiervorrichtung 11 in der dargestellten Vorderansicht eine Mittenlagerung 20 auf. Die Mittenlagerung 20 ist zwischen zwei Wangen 13 auf einem mittelsten Wellenzapfen 21 vorgesehen.

Die Mittenlagerung 20 weist innen ein geteiltes Wälzlager 19 auf, das von einem Lagergehäuse 29 ummantelt ist. Das geteilte Lager 19 ermöglicht es, das Mittenlager 20 leicht an der Kurbelwelle 2 zu montieren oder zu demontieren. Damit ist sowohl ein leichter Aufbau der Förder- und Sortiervorrichtung 11 als auch eine leichte Wartung des Mittenlagers 20 möglich. Beispielsweise kann ein Teil des geteilten Lagers 19 leicht über Schrauben abmontiert werden, woraufhin das Lager 19 einfach wieder durch Verschrauben zusammenmontiert werden kann.

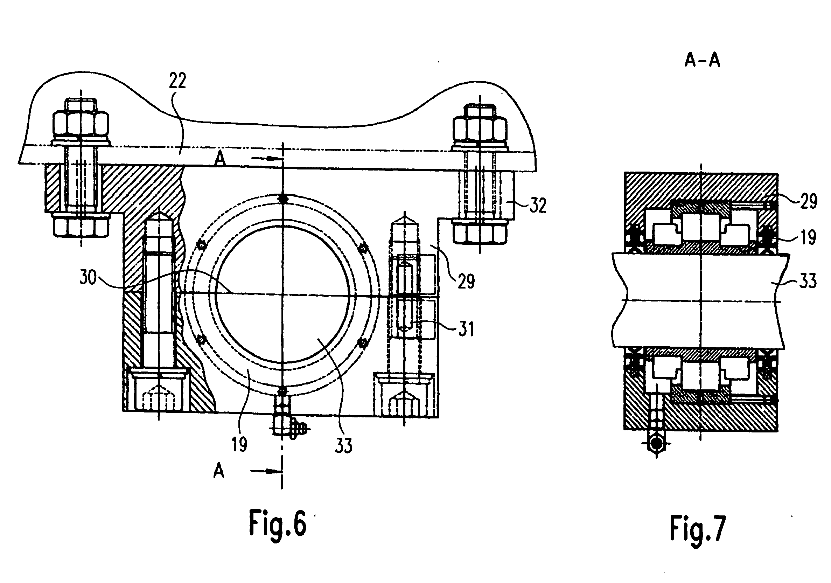

An den Hubzapfen 12 der Kurbelwelle 2 sind links, mittig oder rechts ausgerichtet, ebenfalls geteilte Lager 19 vorgesehen, die vorzugsweise Wälzlager sind. Die geteilten Lager 19 umgreifen die Hubzapfen 12 so, dass kaum Spalt für Verunreinigungen zwischen den geteilten Lagern 19 und dem Hubzapfen 12 vorhanden ist. Ein Beispiel für einen Aufbau des geteilten Lagers 19 ist in den Figuren 6 und 7 dargestellt und soll nachfolgend beschrieben werden.

Die geteilten Lager 19 sind über jeweils ein Verbindungselement 22 mit den Förderelementen 1 gekoppelt. Die Verbindungselemente 22 liegen mit einem Bock 28 auf dem jeweiligen Lagergehäuse 29 der Lager 19 auf und sind mit diesem verschraubt. Die Verbindungselemente 22 können eine elastische Lagerung aufweisen und haben zuoberst eine Aufnahme 23, mit welcher die Förderleisten 8 der Förderelemente 1 verbunden sind.

Auf jeweils mindestens zwei Förderleisten 8 des Förderelementes 1 liegt der Mitnehmer 16 auf. Der Mitnehmer 16 hat eine Breite b. Die Summe der Mitnehmerbreiten b der sechs nebeneinanderliegenden Förderelemente 1 entspricht etwa der lichten Weite zwischen den Seitenwänden 34 und bestimmt die Aufgabebreite B der Förder- und Sortiervorrichtung 11.

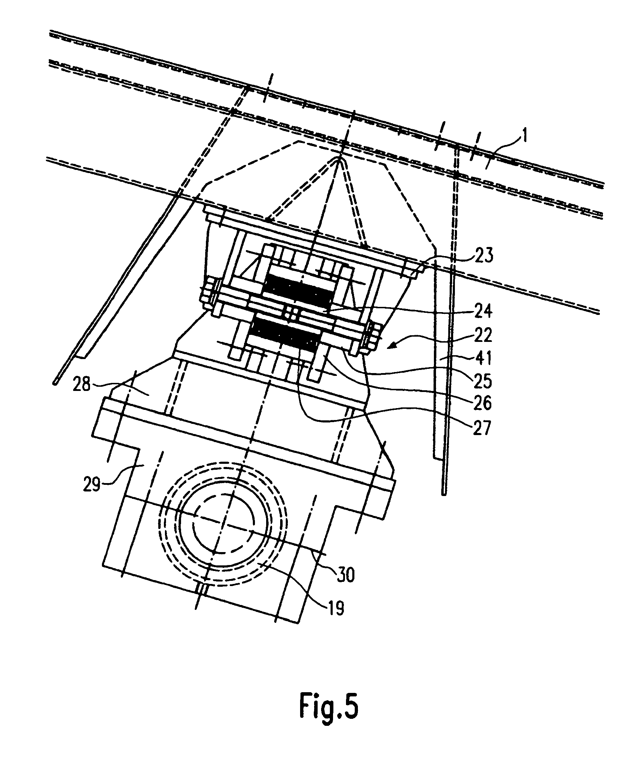

Figur 5 zeigt schematisch einen Ausschnitt der in Figur 4 dargestellten Vorderansicht der Förder- und Sortiervorrichtung 11. Im Detail sind in Figur 5 ein Ausschnitt eines der Förderelemente 1 und eine Schnittdarstellung des Lagers 19 mit dem Lagergehäuse 29 und dem zwischen dem Lager 19 und dem Förderelement 1 befindlichen Verbindungselement 22 dargestellt.

Das geteilte Lager 19 ist ein teilbares Wälzlager. Das Lager 19 ist radial geteilt, Laufringe und Käfig bestehen aus zwei Hälften, die auf der Kurbelwelle 2, die in Figur 4 gezeigt ist, zusammengesetzt werden. Durch diese Konstruktion lässt sich das Lager 19 einfach und schnell ein- und ausbauen. Auch eine Inspektion der Laufflächen im Lager 19 und der Dichtungen ist ohne größeren Arbeits- oder Zeitaufwand möglich.

So kann eine vorbeugende Instandhaltung effektiv durchgeführt werden. Ebenso kann der Austausch des Lagers problemlos ohne längere Maschinenstillstandszeiten durchgeführt werden. Damit ergibt sich der Vorteil, dass die Lagerstellen 19, welche über die gesamte Kurbelwelle 2 verteilt sind, frei zugänglich sind und keine zusätzlichen An- bzw. Umbauteile abgebaut werden müssen, um an das Lager 19 zu gelangen.

Die radiale Teilung des geteilten Lagers 19 ist in Figur 5 durch die Linie 30 dargestellt. Das jeweils oberhalb und unterhalb der radialen Teilung 30 befindliche Teil des geteilten Lagers 19 sind über Schrauben 31, die in Figur 6 dargestellt sind, miteinander verbunden.

Das Lagergehäuse 29 ummantelt das geteilte Lager 19 und sorgt damit insbesondere für den Schutz des Lagers 19 vor äußeren Einflüssen wie z. B. Schmutz. Das Lagergehäuse 29 dient außerdem der Verbindung des Lagers 19 mit dem Verbindungselement 22, was über den Bock 28 mit dem Lagergehäuse 29 mittels Schrauben 32 verschraubt ist.

Die mit der Kurbelwelle 2 gekoppelten Verbindungselemente 22 weisen keine elastische Lagerung in Form von Gummibuchsen 27 auf. Die Förderelemente 1 sind somit über der oben angeordneten Kurbelwelle 2 starr gelagert. Das hat den Vorteil, dass ein Aufschwingen der Förder- und Sortiervorrichtung 11 vermieden wird.

Als Schutz der Lagerung ist um das Verbindungselement 22 ein Abweiserblech 41 vorgesehen.

Figur 6 zeigt schematisch eine Vorderansicht des geteilten Lagers 19 von Figur 4 und 5 im Querschnitt. Figur 6 zeigt insbesondere die Verschraubung des oberen und des unteren Teils des geteilten Lagers 19 durch die Schrauben 31, die die radiale Teilung 30 des Lagers 19 durchdringen. Zudem zeigt Figur 6 die Verschraubung des Lagergehäuses 29 mit dem Verbindungselement 22 mittels der Schrauben 32.

Figur 7 zeigt schematisch das Lager von Figur 6 entlang der Schnittlinie A - A. Durch die mittig dargestellte Aufnahme 33 führt die Kurbelwelle 3.

Die in Figur 4 dargestellte Ansicht zeigt zwar die Kurbelwelle 2 mit den zugehörigen Verbindungselementen 22 und den Förderelementen 1, gilt jedoch hinsichtlich der wesentlichen Konstruktionsmerkmale auch für die oben an den Förderelementen 1 vorgesehene Kurbelwelle 3.

Im Unterschied zu der Kurbelwelle 2 weist die Kurbelwelle 3 der Förder- und Sortiervorrichtung 11 keine Verbindung zu einem Motor, wie dem Motor 17, auf. Statt dessen wird die Kurbelwelle 3 mit der Kurbelwelle 2 über die Verbindung durch die Förderelemente 1 bewegt. Die Kurbelwelle 3 ist damit eine angetriebene Kurbelwelle. Entsprechend besitzt die Kurbelwelle 3 auch keinen Antriebszapfen wie die Kurbelwelle 2.

Das zu der in der Vorrichtung 11 oben angeordneten Kurbelwelle 3 zugehörige Verbindungselement 22 weist eine elastische Lagerung auf, die in dem gezeigten Beispiel zwei Gummibuchsen 27 aufweist. Die Gummibuchsen 27 gleichen im Betrieb der Förder- und Sortiervorrichtung 11 eventuelle Herstellungstoleranzen der Förderelemente oder Paddel 1 oder Kurbelwelle aus. Damit kann ein Längenausgleich zwischen den einzelnen Förderelementen oder Paddeln 1 im Betrieb der Förder- und Sortiervorrichtung 11 gewährleistet werden. Die Gummibuchsen 27 werden jeweils von einem senkrecht angeordneten Halteblech 26 und einer waagerecht angeordneten Distanzbuchse 25 gehalten. Zwischen den Gummibuchsen 27 ist eine beidseitige Verschraubung mit einer Gewindehülse 24 vorgesehen. Auf dem Verbindungselement 22 ist eine Aufnahme 23 angeordnet, die mit dem Förderelement 1 verbunden ist.

Die Kurbelwellen 2, 3 sind aus einer Anzahl von Drehteilen 40, 13, 12 zusammengeschweißt. Das hat den Vorteil, dass jedes der verwendeten Drehteile mit einer hohen Genauigkeit gefertigt werden kann und dennoch die zusammengeschweißte Kurbelwelle 2, 3 mit einem verhältnismäßig geringen Aufwand hergestellt werden kann.

Die Förder- und Sortiervorrichtungen 10, 11 arbeiten grundsätzlich nach dem gleichen Förder- und Sortierprinzip. Durch Inbetriebnahme des Motors 17, der in Figur 4 dargestellt ist, wird über die Kupplung 18 die Kurbelwelle 2 gedreht. Da an der Kurbelwelle 2 die jeweils drei Hubzapfenpaare 12 in jeweils 120°-Teilung zueinander eine Kreisbahn um die Drehachse der Kurbelwelle 2 vollführen, werden abwechselnd die nebeneinander befindlichen Förderelemente oder Paddel 1 auf- bzw. abbewegt.

Das gerichtete Bewegen der Förderelemente 1 überträgt sich an dem oberen Ende der Förder- und Sortiervorrichtungen 10, 11 auf die oben angeordnete Kurbelwelle 3. Dadurch ergibt sich eine synchrone Rotation der Kurbelwellen 2, 3, welche wiederum vorteilhaft für die Bewegung der Förderelemente 1 ist. Durch das Bewegen der Förderelemente 1 kann beispielsweise eine Papier- oder Pappefraktion, die unten auf die Förder- und Sortiervorrichtungen 10, 11 aufgelegt wird, transportiert und sortiert werden.

Dabei fällt insbesondere kleineres Material durch die Durchlassöffnungen 9 in den Lochblechen 39 der Mitnehmer 16 durch die Förderelemente 1 nach unten, wo es aufgefangen werden kann. Insbesondere großflächiges Material wie große Pappen oder auch leichtes Material werden von der Förderbewegung der Förder- und Sortiervorrichtungen 10, 11 nach oben befördert, wo diese Fraktion abgeworfen werden kann. Rollende Bestandteile einer zu separierenden Fraktion gleiten auf den Förder- und Sortiervorrichtungen 10, 11 nach unten und können auf diese Weise aus dem zu trennenden Materialstrom separiert werden.

Die elastischen Lagerungen in den Verbindungselementen 22 oberhalb der oben angeordneten, getriebenen Kurbelwelle 2 bewirken, dass sich während des Betriebs der Förder- und Sortiervorrichtung 10, 11 diese nicht aufschwingt.

Nachdem die Förder- und Sortiervorrichtungen 10, 11 einige Zeit in Betrieb waren, können die geteilten Lager 19 durch einfaches Demontieren gewartet werden.

## Patentansprüche

1. Vorrichtung zum Befördern und Sortieren einer Fraktion (10, 11), insbesondere von Papier oder Pappe, wobei die Vorrichtung (10, 11) aufweist:
mehrere, parallel nebeneinander angeordnete Förderelemente (1);
wenigstens eine treibende und eine getriebene Kurbelwelle (2, 3) zum Bewegen der Förderelemente (1);
zwischen den Kurbelwellen (2, 3) und den Förderelementen (1) vorgesehene Verbindungselemente (22) mit wenigstens einem Lager zur Verbindung mit der Kurbelwelle (2, 3),
**dadurch gekennzeichnet,**
**dass** das Lager ein radial geteiltes Lager (19) ist, das auf der Kurbelwelle (2, 3) zusammensetzbar ist, wobei an den Verbindungselementen (22), die die angetriebene Kurbelwelle (3) mit den Förderelementen (1) verbinden, eine elastische Lagerung vorgesehen ist, und wobei die Verbindungselemente (22), die die treibende Kurbelwelle (2) mit den Förderelementen (1) verbinden, eine starre Lagerung aufweisen.

2. Vorrichtung nach Anspruch 1, **dadurch gekennzeichnet,**
**dass** das Lager (19) um einen Hubzapfen (12) der Kurbelwelle (2, 3) umgreifend montiert ist.

3. Vorrichtung nach Anspruch 1 oder 2, **dadurch gekennzeichnet,**
**dass** das Lager (19) in einem teilbaren Lagergehäuse (29) vorgesehen ist.

4. Vorrichtung nach einem der vorhergehenden Ansprüche, **dadurch gekennzeichnet,**
**dass** die Kurbelwelle (2, 3) aus mehreren Drehteilen zusammengeschweißt ist.

5. Vorrichtung nach einem der vorhergehenden Ansprüche, **dadurch gekennzeichnet,**
**dass** die elastische Lagerung wenigstens eine Gummibuchse (27) aufweist.

6. Vorrichtung nach einem der vorhergehenden Ansprüche, **dadurch gekennzeichnet,**
**dass** an wenigstens einer der Kurbelwellen (2, 3) eine Mittenlagerung (20) um den mittelsten Wellenzapfen (21) vorgesehen ist, die ein geteiltes Lager (19) aufweist.

7. Vorrichtung nach einem der vorhergehenden Ansprüche, **dadurch gekennzeichnet,**
**dass** wenigstens zwei der Förderelemente (1) unterschiedliche Breiten aufweisen.

## Claims

1. Device (10, 11) for conveying and sorting a fraction, in particular of paper or board, the device (10, 11) comprising a plurality of conveying elements (1) arranged in parallel alongside one another, at least one driving and one driven crankshaft (2, 3) for moving the conveying elements (1), and connecting elements (22) provided between the crankshafts (2, 3) and the conveying elements (1) and having at least one bearing for connection to the crankshaft (2, 3), **characterised in that** the bearing is a radially split bearing (19) which can be assembled on the crankshaft (2, 3), a flexible bearing arrangement being provided on the connecting elements (22) connecting the driven crankshaft (3) to the conveying elements (1) and the connecting elements (22) connecting the driving crankshaft (2) to the conveying elements (1) having a rigid bearing arrangement.

2. Device according to claim 1, **characterised in that** the bearing (19) is mounted in such a manner that it embraces a crank pin (12) of the crankshaft (2, 3).

3. Device according to claim 1 or claim 2, **characterised in that** the bearing (19) is provided in a bearing housing (29) which can be split.

4. Device according to one of the preceding claims, **characterised in that** the crankshaft (2, 3) is welded together from a plurality of turned parts.

5. Device according to one of the preceding claims, **characterised in that** the flexible bearing arrangement has at least one rubber bushing (27).

6. Device according to one of the preceding claims, **characterised in that** a central bearing arrangement (20) having a split bearing (19) is provided around the centremost journal (21) on at least one of the crankshafts (2, 3).

7. Device according to one of the preceding claims, **characterised in that** at least two of the conveying elements (1) have different widths.

## Revendications

1. Dispositif pour l'acheminement et le tri d'une fraction (10, 11), en particulier du papier ou du carton, le dispositif (10, 11) comportant :
- plusieurs éléments d'acheminement (1) qui sont disposés parallèlement les uns à côté des autres,
- au moins un vilebrequin de commande et un vilebrequin commandé (2, 3) pour déplacer les éléments d'acheminement (1),
- des éléments de liaison (22) qui sont prévus entre les vilebrequins (2, 3) et les éléments d'acheminement (1) et qui comportent au moins un palier pour la liaison avec le vilebrequin (2, 3),
**caractérisé en ce que** le palier est un palier divisé radialement (19) qui est apte à être assemblé sur le vilebrequin (2, 3), un montage élastique étant prévu sur les éléments de liaison (22) qui relient le vilebrequin commandé (3) aux éléments d'acheminement (1), et les éléments de liaison (22) qui relient le vilebrequin de commande (2) aux éléments d'acheminement (1) présentant un montage rigide.

2. Dispositif selon la revendication 1, **caractérisé en ce que** le palier (19) est monté de manière enveloppante autour d'un maneton (12) du vilebrequin (2, 3).

3. Dispositif selon la revendication 1 ou 2, **caractérisé en ce que** le palier (19) est prévu dans une enveloppe de palier (29) apte à être divisée.

4. Dispositif selon l'une des revendications précédentes, **caractérisé en ce que** le vilebrequin (2, 3) est assemblé par soudage à partir de plusieurs pièces rotatives.

5. Dispositif selon l'une des revendications précédentes, **caractérisé en ce que** le montage élastique comporte au moins un manchon en caoutchouc (27).

6. Dispositif selon l'une des revendications précédentes, **caractérisé en ce qu'**il est prévu sur l'un au moins des vilebrequins (2, 3), autour du maneton du milieu (21), un montage central (20) qui comporte un palier divisé (19).

7. Dispositif selon l'une des revendications précédentes, **caractérisé en ce qu'**au moins deux des éléments d'acheminement (1) ont des largeurs différentes.
